Europäisches Patentamt
European Patent Office
Office européen des brevets

(19)

(11) Veröffentlichungsnummer: **0 281 916**
**A2**

(12) # EUROPÄISCHE PATENTANMELDUNG

(21) Anmeldenummer: **88103156.1**

(22) Anmeldetag: **02.03.88**

(51) Int. Cl.[4]: **C08L 71/04**, C08L 77/00, C08L 25/02

(30) Priorität: **11.03.87 DE 3707796**

(43) Veröffentlichungstag der Anmeldung: **14.09.88 Patentblatt 88/37**

(84) Benannte Vertragsstaaten: **BE DE FR GB NL**

(71) Anmelder: **BASF Aktiengesellschaft**
**Carl-Bosch-Strasse 38**
**D-6700 Ludwigshafen(DE)**

(72) Erfinder: **Taubitz, Christof, Dr.**
**In der Dreispitz 15**
**D-6706 Wachenheim(DE)**
Erfinder: **Gausepohl, Hermann, Dr.**
**Neuweg 10**
**D-6704 Mutterstadt(DE)**
Erfinder: **Seiler, Erhard, Dr.**
**Erpolzheimer Strasse 1**
**D-6700 Ludwigshafen(DE)**
Erfinder: **Boehlke, Klaus, Dr.**
**Gerhart-Hauptmann-Strasse 53**
**D-6717 Hessheim(DE)**
Erfinder: **Heckmann, Walter, Dr.**
**Geiersbergstrasse 2**
**D-6940 Weinheim(DE)**

(54) **Thermoplastische Formmassen auf der Basis von Polyphenylenethern und Polyamiden.**

(57) Thermoplastische Formmassen, enthaltend als wesentliche Komponenten

A) 5 - 92 Gew.% eines Polyphenylenethers, welcher bis zu 50 Gew.% eines von C) verschiedenen Styrolpolymeren enthalten kann,

B) 5 - 92 Gew.% eines Polyamids,

C) 3 - 50 Gew.% eines Copolymerisats aufgebaut aus

$C_1$) 97 - 99,9 Gew.% Styrol und/oder substituierten Styrolen der allgemeinen Formel I

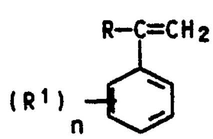

(I),

wobei R ein Wasserstoffatom, eine Alkylgruppe mit 1 - 8 C-Atomen oder ein Halogenatom und $R^1$ eine Alkylgruppe mit 1 bis 8 C-Atomen oder ein Halogenatom darstellen und n 0, 1, 2 oder 3 ist,

$C_2$) 0,1 - 3 Gew.% einer $\alpha,\beta$-ungesättigten Dicarbonylverbindung und

$C_3$) 0 - 10 Gew.% weiteren, nicht ionogenen Comonomeren, sowie darüber hinaus

D) 0 - 35 Gew.% eines schlagzäh modifizierenden Kautschuks.

EP 0 281 916 A2

## Thermoplastische Formmassen auf der Basis von Polyphenylenethern und Polyamiden

Die Erfindung betrifft thermoplastische Formmassen, enthaltend als wesentliche Komponenten

A) 5 - 92 Gew.% eines Polyphenylenethers, welcher bis zu 50 Gew.% eines von C) verschiedenen Styrolpolymeren enthalten kann,

B) 5 - 92 Gew.% eines Polyamids,

C) 3 - 50 Gew.% eines Copolymerisats aufgebaut aus

$C_1$) 97 - 99,9 Gew.% Styrol und/oder substituierten Styrolen der allgemeinen Formel I

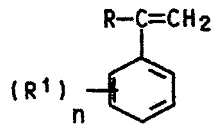

(I),

wobei R ein Wasserstoffatom, eine Alkylgruppe mit 1 - 8 C-Atomen oder ein Halogenatom und $R^1$ eine Alkylgruppe mit 1 bis 8 C-Atomen oder ein Halogenatom darstellen und n 0, 1, 2 oder 3 ist,

$C_2$) 0,1 - 3 Gew.% einer $\alpha,\beta$-ungesättigten Dicarbonylverbindung und

$C_3$) 0 - 10 Gew.% weiteren, nicht ionogenen Comonomeren sowie darüber hinaus

D) 0 - 35 Gew.% eines schlagzäh modifizierenden Kautschuks.

Außerdem betrifft die Erfindung die Verwendung derartiger Formmassen zur Herstellung von Formkörpern und aus den erfindungsgemäßen Formmassen als wesentliche Komponenten erhältliche Formkörper.

Aus der EP-A-46 040 sind Formmassen auf der Basis von Polyphenylenethern und Polyamiden bekannt, die ein Copolymer enthalten, welches Einheiten von vinylaromatischen Monomeren und $\alpha,\beta$-ungesättigten Dicarbonsäureanhydriden oder -imiden aufweist.

Ausweislich der Beispiele werden Copolymere eingesetzt, deren Gehalt an Dicarbonsäureanhydrid oder -imid in der Regel mehr als 8, insbesondere mindestens 10 mol% beträgt.

In der EP-A-147 874 werden thermoplastische Formmassen aus Polyphenylenethern und Polyamiden beschrieben, welche ein Copolymer aus vinylaromatischen Monomeren und $\alpha,\beta$-ungesättigten Dicarbonsäuren enthalten, wobei der Dicarbonsäureanteil im Monomergemisch 41 bis 50 mol% beträgt. Das Copolymer wird in einer Menge von 0,1 bis 1,9 Gew.% zu den Massen aus Polyamiden und Polyphenylenethern zugesetzt.

Diesen bekannten Massen haftet der Nachteil an, daß sie nur eine geringe Fließfähigkeit aufweisen, welche sich bei der Spritzgußverarbeitung störend auswirkt.

Der vorliegenden Erfindung lag daher die Aufgabe zugrunde, thermoplastische Formmassen auf der Basis von Polyphenylenethern und Polyamiden zur Verfügung zu stellen, die sich durch gute mechanische Eigenschaften und eine gute Fließfähigkeit auszeichnen.

Erfindungsgemäß wird diese Aufgabe durch die eingangs definierten thermoplastischen Formmassen gelöst.

Bevorzugte Massen dieser Art sind den Unteransprüchen zu entnehmen.

Die erfindungsgemäßen Formmassen zeichnen sich durch gute mechanische Eigenschaften, insbesondere auch eine gute Schlagzähigkeit sowie durch eine gegenüber bekannten Formmassen deutlich verbesserte Fließfähigkeit aus.

Die erfindungsgemäßen thermoplastischen Formmassen haben den Vorteil, daß sie gut verarbeitbar sind, gute mechanische Eigenschaften und eine hohe Schlagzähigkeit und Lösungsmittelbeständigkeit aufweisen. Außerdem ist keine Delaminierung von aus den Formmassen hergestellten Formteilen zu beobachten.

Die in den erfindungsgemäßen Formmassen enthaltenen Polyphenylenether A) sind an sich bekannt. Es handelt sich um Verbindungen auf Basis von substituierten, insbesondere disubstituierten Polyphenylenoxiden, wobei der Ethersauerstoff der einen Einheit an den Benzolkern der benachbarten Einheit gebunden ist. Vorzugsweise werden in 2-und/oder 6-Stellung zum Sauerstoffatom substituierte Polyphenylenoxide verwendet, wobei vorteilhaft mindestens 50 Einheiten miteinander verknüpft sind. Als Beispiele für Substituenten sind Halogenatome wie Chlor oder Brom und Alkylreste mit 1 bis 4 Kohlenstoffatomen, die vorzugsweise kein $\alpha$-ständiges tertiäres Wasserstoffatom aufweisen, z.B. Methyl-, Ethyl-, Propyl-oder Butylreste zu nennen. Die Alkylreste können ihrerseits durch Halogenatome, wie Chlor oder Brom oder durch eine Hydroxigruppe substituiert sein. Weitere Beispiele möglicher Substituenten sind Alkoxireste, vorzugsweise

mit bis zu 4 Kohlenstoffatomen oder gegebenenfalls durch Halogenatome und/oder Alkylgruppen substituierte Phenylreste. Ebenfalls geeignet sind Copolymere verschiedener Phenole, wie z.B. Copolymere von 2,6-Dimethylphenol und 2,3,6-Trimethylphenol. Selbstverständlich können auch Gemische verschiedener Polyphenylenether eingesetzt werden.

Beispiele für Polyphenylenether sind Poly(2,5-dilauryl-1,4-phenylen)oxid, Poly(2,6-diphenyl-1,4-phenylen)oxid, Poly(2,6-dimethoxi-1,4-phenylen)oxid, Poly(2,6-diethoxi-1,4-polyphenylen)oxid, Poly(2-methoxi-6-ethoxi-1,4-phenylen)oxid, Poly(2-ethyl-6-stearyloxi-1,4-phenylen)oxid, Poly(2,6-dichlor-1,4-phenylen)oxid, Poly(2-methyl-6-phenylen-1,4-phenylen)oxid, Poly(2,6-dibenzyl-1,4-phenylen)oxid, Poly(2-ethoxi-1,4-phenylen)oxid, Poly(2-chlor-1,4-phenylen)oxid, Poly(2,5-dibrom-1,4-phenylen)oxid. Bevorzugt werden Polyphenylenether eingesetzt, bei denen die Substituenten Alkylreste mit 1 bis 4 Kohlenstoffatomen sind, wie z.B. Poly-(2,6-dimethyl-1,4-phenylen)oxid, Poly(2,6-diethyl-1,4-phenylen)oxid, Poly(2-methyl-6-ethyl-1,4-phenylen)-oxid, Poly(2-methyl-6-propyl-1,4-phenylen)oxid, Poly(2,6-dipropyl-1,4-phenylen)oxid und Poly(2-ethyl-6-propyl-1,4-phenylen)oxid.

Hinsichtlich der physikalischen Eigenschaften der Polyphenylenether werden solche bevorzugt, die eine relative Viskosität von 0,4 bis 0,7 dl/g, gemessen in 1gew.%iger Lösung in Chloroform bei 30°C, aufweisen.

Der Anteil des Polyphenylenethers an den erfindungsgermäßen Formmassen ist nicht kritisch; er liegt im Bereich von 5 bis 92 Gew.%, vorzugsweise 10 bis 89 Gew.%, bezogen auf die Gesamtmasse der Komponenten A) - D). Besonders bevorzugt sind Formmassen, die 20 bis 47 Gew.%, insbesondere 25 bis 40 Gew.% Polyphenylenether enthalten.

Die als Komponente A) verwendeten Polyphenylenether können teilweise durch von C) verschiedene Styrolpolymere ersetzt werden. Vorzugsweise wird der Anteil des Polyphenylenethers bis zur Hälfte durch solche Styrolpolymere ersetzt. Beispiele für derartige Styrolpolymere sind Polystyrol, Poly-α-methylstyrol oder Poly-p-methylstyrol, von denen Polystyrol bevorzugt wird. Ebenfalls bevorzugt werden Styrolpolymere, die in Gegenwart von 2 bis 20 Gew.% eines kautschukelastischen Polymerisats hergestellt wurden. Dabei sind kautschukartige Polymerisate auf der Basis von Butadien, z.B. Styrol-Butadien-Polymerisate, Polybutadien und ferner Butadien-Styrol-Blockcopolymerisate geeignet. Im Falle der Verwendung von Styrol-Dien-Blockcopolymerisaten, hat es sich als vorteilhaft herausgestellt, wenn bis zu 20% des Gehalts an Polyphenylenoxid durch Butadien-oder Isopren-Styrol-Blockcopolymerisate oder deren hydrierte Produkte ersetzt werden.

Manchmal ist es vorteilhaft, den Polyphenylenether bis zu einem Anteil von 40 Gew.%, vorzugsweise bis zu 20 Gew.%, bezogen auf das Gesamtgewicht der Formmassen durch einen "modifizierten" Polyphenylenether A' zu ersetzen. Im allgemeinen werden jedoch mit unmodifizierten Polyphenylenethern allein auch voll zufriedenstellende Produkte erhalten.

Unter "modifiziert" soll dabei eine durch die Umsetzung der nachfolgend beschriebenen Komponenten $a_1$) bis $a_5$) hervorgerufene Veränderung des Polyphenylenethers verstanden werden.

Bei der Komponente $a_1$) handelt es sich um an sich bekannte Polyphenylenether, die beispielsweise durch oxidative Kupplung aus in o-Position disubstituierten Phenolen hergestellt werden können. Vorzugsweise werden solche Polyphenylenether eingesetzt, die mit vinylaromatischen Polymeren verträglich, d.h. ganz oder weitgehend in diesen Polymeren löslich sind (vgl. A. Noshay, Block Copolymers, S. 8 bis 10, Academic Press, 1977 und O. Olabisi, Polymer-Polymer Miscibility, 1979, S. 117 bis 189).

Der Anteil der Komponente $a_1$), bezogen auf die Summe der Komponenten $a_1$ bis $a_5$) beträgt 4,95 bis 99,95, vorzugsweise 10 bis 99,95 und insbesondere 50 bis 90 Gew.%.

Die eingesetzten Polyphenylenether weisen im allgemeinen ein Molekulargewicht (Gewichtsmittelwert) im Bereich von 10.000 bis 80.000, vorzugsweise von 15.000 bis 60.000 auf.

Nur beispielsweise seien hier einige Polyphenylenether aufgeführt, wie sie u.a. in O. Olabisi, l.c., S. 224 bis 230 und 245 genannt werden wie Poly(2,6-diethyl-1-phenylen)-oxid, Poly(2-methyl-6-ethyl-1,4-phenylen)oxid, Poly(2-methyl-6-propyl-1,4-phenylen)oxid, Poly-(2,6-dipropyl-1,4-phenylen)oxid, Poly(2-ethyl-6-propyl-1,4-phenylen)oxid, bevorzugt Poly(2,6-dimethyl-1,4-phenylen)oxid oder Copolymere, wie solche, die 2,3,6-Trimethylphenol enthalten, außerdem Polymermischungen. Besonders bevorzugt ist jedoch Poly(2,6-dimethyl-1,4-phenylen)oxid.

Die Komponente $a_2$), die gegebenenfalls am Aufbau des modifizierten Polyphenylenethers beteiligt ist, ist ein vinylaromatisches Polymer, das vorzugsweise mit dem eingesetzten Polyphenylenether verträglich ist. Das Molekulargewicht dieser Polymere liegt im allgemeinen im Bereich von 1500 bis 2.000.000, vorzugsweise im Bereich von 70.000 bis 1.000.000.

Beispiele für bevorzugte, mit Polyphenylenethern verträgliche vinylaromatische Polymere sind der bereits erwähnten Monographie von Olabisi, S. 224 bis 230 und 245 zu entnehmen. Nur stellvertretend seien hier vinylaromatische Polymere aus Styrol, Chlorstyrol, α-Methylstyrol, p-Methylstyrol genannt; in untergeordneten Anteilen (vorzugsweise nicht mehr als 20, insbesondere nicht mehr als 8 Gew.%), können

auch Comonomere wie (Meth)acrylnitril oder (Meth)acrylsäureestern am Aufbau beteiligt sein. Ein besonders bevorzugtes vinylaromatisches Polymeres ist Polystyrol. Es versteht sich, daß auch Mischungen dieser Polymere eingesetzt werden können.

Verfahren zur Herstellung solcher vinylaromatischer Polymeren sind an sich bekannt und in der Literatur beschrieben, so daß sich hier nähere Angaben erübrigen.

Nur beispielsweise seien hier als geeignete Polymerisationsverfahren die Masse-, Suspensions-, Emulsions-oder Lösungspolymerisation erwähnt.

Der Anteil des vinylaromatischen Polymeren $a_2$) an der Komponente A') liegt im Bereich von 0 bis 90, vorzugsweise 0 bis 70 und insbesondere 0 bis 60 Gew.%.

Als wesentliche Komponente $a_3$) enthält der modifizierte Polyphenylenether A') mindestens eine der Verbindungen $a_{31}$) bis $a_{35}$)

Prinzipiell können auch Mischungen verschiedener Verbindungen $a_{31}$) bis $a_{35}$) eingesetzt werden, doch ist im allgemeinen die Verwendung nur einer dieser Verbindungsarten vorteilhaft.

Bei der Komponente $a_{31}$) handelt es sich um Fumarsäure. Deren Anteil beträgt 0,05 bis 10 Gew.%, vorzugsweise 0,1 bis 5 Gew.%, bezogen auf die Summe der Komponenten $a_1$) bis $a_5$).

Bei Verwendung von Fumarsäure ($a_{31}$) als Bestandteil $a_3$) hat es sich häufig als vorteilhaft erwiesen, wenn die Formmassen einen gewissen Mindestgehalt an vinylaromatischem Polymeren $a_2$), vorzugsweise mindestens 1,95 Gew.%, insbesondere mindestens 4,95 Gew.%, bezogen auf modifizierten Polyphenylenether, enthalten.

Die Komponenten $a_{32}$) sind Maleinimide der allgemeinen Formel II

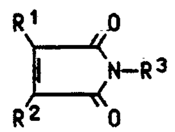 (II),

wobei $R^1$, $R^2$ und $R^3$ Wasserstoff, Alkyl-, Alkoxy-, Cycloalkyl-, Alkenyl-, Aryl-, Arylen-oder Alkylengruppen mit 1 bis 12 C-Atomen sind.

Vorzugsweise sind die Substituenten $R^1$, $R^2$ und $R^3$ Alkylgruppen mit 1 bis 4 C-Atomen, beispielsweise Methyl-, Ethyl-oder n-, i-oder t-Butyl, Cycloalkylgruppen mit bis zu 8 C-Atomen oder Phenylgruppen, die gegebenenfalls alkyl-oder alkoxysubstituiert sein können.

Nur beispielhaft seien als bevorzugte Maleinimide N-Methylmaleinimid, N-Butylmaleinimid, N-Cyclohexylmaleinimid, N-Phenylmaleinimid, N-(p-Methylphenyl)maleinimid, N-(3,5-Dimethylphenyl)maleinimid, N-(p-Methoxyphenyl)maleinimid, N-Benzylmaleinimid, N-(1-Naphthyl)maleinimid oder deren Mischungen genannt. Von diesen wird N-Phenylmaleinimid besonders bevorzugt.

Der Anteil des Maleinimids der allgemeinen Formel II beträgt 0,05 bis 10, vorzugsweise 0,1 bis 5 Gew.%, bezogen auf die Summe der Komponenten $a_1$) bis $a_5$).

Ebenfalls geeignet als Komponente $a_3$) sind Amidgruppen enthaltende Monomere mit mindestens einer polymerisierbaren Doppelbindung, vorzugsweise solche der allgemeinen Formeln III oder IV

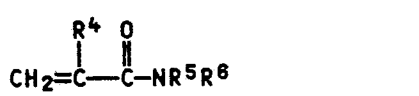 (III)

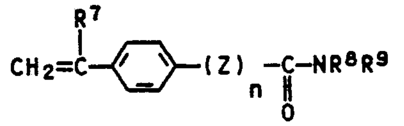 (IV),

wobei $R^4$, $R^5$, $R^6$, $R^7$, $R^8$ und $R^9$ Wasserstoff, Alkyl-oder Alkoxygruppen mit 1 bis 12 C-Atomen, Cycloalkylgruppen mit bis zu 12 C-Atomen oder Arylgruppen und Z Alkenylgruppen mit 1 bis 12 C-Atomen darstellen und n den Wert 0 oder 1, vorzugsweise 0 hat.

Bevorzugte Substituenten $R^5$, $R^6$, $R^8$ und $R^9$ sind Alkylgruppen mit 1 bis 10 C-Atomen, Cycloalkylgruppen mit bis zu 8 C-Atomen oder Arylgruppen, vorzugsweise Phenyl. $R^4$ und $R^7$ sind bevorzugt H oder Methyl.

Beispielhaft seien hier Acrylamid, N-Methyl-, N-Ethyl-, N-Propyl-, N-Butyl-, N-Pentyl-, N-Hexyl-, N-Heptyl-, N-Octyl-, N-Nonyl-, N-(2-ethylhexyl)-acrylamid, N-Cyclohexylacrylamid, N-Phenylacrylamid, die entsprechenden N,N-Derivate wie N,N-Dimethylacrylamid und die entsprechenden Methacrylamide sowie deren Mischungen genannt.

Bevorzugt werden Acrylamid, Methacrylamid, N-Phenylacrylamid und N-Phenylmethacrylamid verwendet.

Der Anteil der Komponente $a_{33}$) beträgt 0,05 bis 10, vorzugsweise 0,1 bis 10, insbesondere 1 bis 5 Gew.%, bezogen auf die Summe der Komponenten $a_1$) bis $a_5$).

Als Komponente $a_3$) kann auch ein Lactam-Gruppen enthaltendes Monomer mit mindestens einer polymerisierbaren Doppelbindung ($a_{34}$) eingesetzt werden.

Vorzugsweise werden Lactame der allgemeinen Struktur V

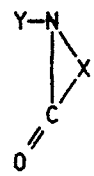

(V)

eingesetzt, wobei X eine lineare oder verzweigte Alkylengruppe mit 2 bis 15 C-Atomen darstellt und Y die allgemeinen Formel

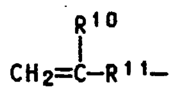

hat,

wobei $R^{10}$ ein Wasserstoffatom, eine Alkyl-oder Alkoxygruppe mit 1 bis 4 C-Atomen und $R^{11}$ einen zweibindigen Substituenten

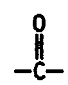

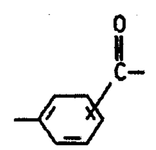

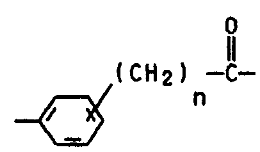

wobei n eine ganze Zahl von 1 bis 4 ist, darstellen.

Bevorzugte Substituenten Y sind ganz allgemein Vinyl-, Acryloyl-, Methacryloyl-oder Reste mit Styrol-Grundstrukturen.

Besonders bevorzugt sind Lactameinheiten, die zu Polyamiden polymerisierbar oder copolymerisierbar sind, wie dies in Houben-Weyl, Methoden der organ. Chemie, Band X/2, S. 511 bis 587, (1958) und Band XIV/2, S. 111 bis 131, beschrieben wird.

Beispielsweise seien genannt:

$\beta$-Propiolactame (Azetidin-2-one), wie

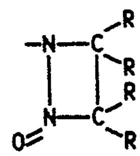

wobei R gleiche oder verschiedene Alkylgruppen mit 1 bis 6 C-Atomen oder Wasserstoff sind. Derartige Verbindungen sind beschrieben bei R. Graf, Angewandte Chemie, 74, 523 bis 530, (1962) und H. Bastian, Angewandte Chemie, 80, 304 bis 312, (1968).

Nur beispielhaft sei als ein Vertreter dieser Gruppe 3,3'-Dimethyl-3-propiolactam genannt.

Ebenfalls bevorzugte Lactam-Einheiten sind 2-Methylpyrrolidone

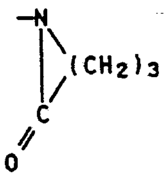

ε—Caprolactam, wie

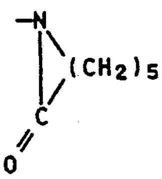

und außerdem 7-Önantholactam, 8-Capryllactam und 12-Laurinlactam wie sie bei K. Dachs, Angewandte Chemie, 74, 540 bis 545, (1962) beschrieben werden. Ganz besonders bevorzugt sind 2-Pyrrolidone und 6-Caprolactame.

Es können auch Mischungen dieser Verbindungen eingesetzt werden.

Vorzugsweise sind die Lactameinheiten über eine Carbonylgruppe am Stickstoff in den Polyphenylenether A' eingebaut, wie dies nachstehend allgemein dargestellt ist.

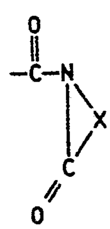

Als besonders bevorzugtes Beispiel einer Komponente $a_{34}$) sei hier nur N-(Meth)acryloyl-ε-caprolactam

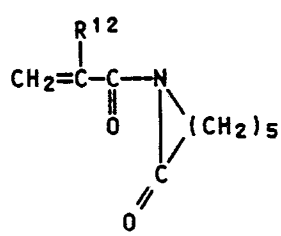

genannt,
wobei $R^{12}$ ein Wasserstoffatom oder eine Methylgruppe sein kann.

Der Anteil der Komponente $a_{34}$) beträgt 0,05 bis 10, vorzugsweise 0,1 bis 10 und insbesondere 0,5 bis 5 Gew.%, bezogen auf die Summe der Komponenten $a_1$) bis $a_5$).

Bei der Komponente $a_{35}$) handelt es sich um Halbester oder Halbamide von $\alpha,\beta$-ungesättigten Dicarbonsäuren. Als Beispiele für bevorzugte Dicarbonsäuren seien Maleinsäure, Fumarsäure, Chlormaleinsäure, Dichlormaleinsäure, Methylmaleinsäure, Butenylbernsteinsäure und Tetrahydrophthalsäure genannt, von denen Maleinsäure und Fumarsäure besonders bevorzugt werden.

Zur Herstellung der Halbester oder Halbamide können diese Säuren oder deren Anhydride mit den entsprechenden Alkoholen bzw. Aminen umgesetzt werden. Entsprechende Verfahren sind an sich bekannt und in der Literatur beschrieben, so daß sich hier nähere Angaben erübrigen.

Als Alkohole zur Herstellung der Halbester werden bevorzugt primäre und sekundäre Monoalkohole, wie Methanol, Ethanol, n-und i-Propanol, n-und i-Butanol, Pentanole, Hexanole, Heptanole, Octanole, z.B. 2-Ethylhexylalkohol und höhere Alkohole wie Dodecanole und cycloaliphatische Alkohole, z.B. Cyclohexanol eingesetzt. Weiter eignen sich auch Alkohole mit aromatischen Struktureinheiten wie z.B. Benzylalkohol. Neben C, H und O können die Alkohole auch Heteroatome - in der Hauptkette oder als Substituenten - wie N, O, S und Si enthalten. Schließlich seien auch Alkohole mit Ketogruppen in der Kette oder mit Halogensubstituenten erwähnt. Bevorzugt werden jedoch Alkanole mit 1 bis 6 C-Atomen.

Als Amine zur Herstellung der Halbamide seien ganz allgemein sekundäre Amine und N-Alkylaniline genannt. Beispiele hierfür sind N-Methyl-oder N-Ethylalkylamine oder N-Methylanilin. Wie die Alkohole können die Amine auch Heteroatome und funktionelle Gruppen enthalten.

Ganz allgemein werden Halbester den Halbamiden vorgezogen. Der Anteil von $a_{35}$) beträgt 0,05 bis 10, vorzugsweise 0,1 bis 5 Gew.%, bezogen auf das Gesamtgewicht der Komponente A').

Formmassen, die die Komponente $a_{35}$) enthalten, weisen häufig besonders gute Fließeigenschaften, d.h. besonders hohe Schmelzindex-Werte (MFI) auf.

Gegebenenfalls können bei der Herstellung des modifizierten Polyphenylenethers A') auch weitere Comonomere $a_4$) eingesetzt werden, die unter den Herstellungsbedingungen mit den Komponenten $a_1$) und gegebenenfalls $a_2$) reagieren bzw. auf diese aufpfropfen. Beispielsweise seien hier Acrylsäure, Methacrylsäure, Acrylate, Methacrylate und vinylaromatische Monomere wie Styrol, $\alpha$-Methylstyrol und Vinyltoluol genannt, um nur einige aufzuführen.

Der Anteil der Komponente $a_4$) beträgt 0 bis 80, vorzugsweise 0 bis 45 und insbesondere nicht mehr als 20 Gew.%, bezogen auf die Summe der Komponenten $a_1$) bis $a_5$). Besonders bevorzugt werden Formmassen, die keine Komponente $a_4$) enthalten.

Als Komponente $a_5$) können bei der Herstellung der modifizierten Polyphenylenether A') bis zu 20 Gew.% an Radikalstartern eingesetzt werden.

Der Anteil der Komponente $a_5$) ist in der Regel geringer als die Summe der Anteile der Komponenten $a_3$) und $a_4$). Vorzugsweise handelt es sich dabei um ein organisches Peroxid oder eine Azo-Verbindung.

Besonders bevorzugt sind organische Peroxide mit einer Haltwertzeit im Bereich von 1 bis 30 sec. bei 200°C. Die Wahl des Radikalstarters richtet sich nach der gewünschten Reaktionstemperatur.

Beispielsweise seien als Radikalstarter genannt:

Di-(2,4-dichlorbenzoyl)peroxid, tert.-Butylperoxid, Di-(3,5,5-trimethylhexanol)peroxid, Di-lauroylperoxid, Di-decanoylperoxid, Di-propionylperoxid, Di-benzoylperoxid, tert.-Butylperoxy-2-ethylhexoat, tert.-Butylperoxydiethylacetat, tert.-Butylperoxyisobutyrat, 1,1-Di-tert.-butylperoxy-3,3,5-trimethylcyclohexan, tert.-Butylperoxyisopropylcarbonat, tert.-Butylperoxy-3,3,5-trimethylhexoat, tert.-Butylperacetat, tert.-Butylperbenzoat, 4,4-Di-tert.-butylperoxyvalerisansäure-butylester, 2,2-Ditert.-butylperoxybutan, Di-cumylperoxid, tert.-Butylcumylperoxid, 1,3-Di(tert.-butylperoxyisopropyl)benzol, Di-tert.-butylperoxid, Di-isopropylbenzolmonohydroperoxid, Cumolhydroperoxid, tert.-Butylhydroperoxid, 2,2-Azo-di(2,4-dimethylvaleronitril), Azo-bis-isobutyronitril, wobei Di-cumylperoxid besonders bevorzugt wird.

Häufig hat es sich als vorteilhaft erwiesen, ohne die Komponente $a_5$) zu arbeiten. Dies gilt insbesondere dann, wenn als Komponente $a_3$) Fumarsäure ($a_{31}$) eingesetzt wird, da hier bei der Verwendung von Radikalstartern unter Umständen unerwünschte Nebenreaktionen auftreten können.

Zur Herstellung des modifizierten Polyphenylenethers A' können die Komponenten $a_1$) bis $a_5$) bei 250 bis 350°C, vorzugsweise 265 bis 295°C, miteinander umgesetzt werden. Hierzu eignen sich besonders Extruder, da in diesen im allgemeinen auch eine gute Durchmischung der Komponenten erzielt wird. Die Verweilzeiten liegen im allgemeinen im Bereich von 0,5 bis 30 min., vorzugsweise von 1 bis 3 min. Besonders gut für das erfindungsgemäße Verfahren eignen sich Zweischneckenextruder.

Als Komponente B), enthalten die erfindungsgemäßen Formmassen mindestens ein Polyamid. Obwohl hinsichtlich der Struktur der Polyamide keine Beschränkungen zu beachten sind, seien vorzugsweise Polyamide genannt, die sich von Lactamen mit 7 bis 13 Ringgliedern ableiten, wie z.B. Polycaprolactam, Polycapryllactam oder Polylaurinlactam, sowie Polyamide, die durch Umsatz von Dicarbonsäuren mit

Diaminen erhalten werden. Als Dicarbonsäuren, die auch in Kombinationen einsetzbar sind, sind Alkandicarbonsäuren mit 6 bis 12, insbesondere 6 bis 10 Kohlenstoffatomen, sowie Terephthalsäure und Isophthalsäure zu nennen, Beispiele für Diamine, die ebenfalls in Kombinationen einsetzbar sind, sind Alkandiamine mit 6 bis 12, insbesondere 6 bis 8 Kohlenstoffatomen, des weiteren m-Xylylendiamin, Bis(4-aminophenyl)methan, Bis(4-aminocyclohexyl)methan oder Bis(4-aminophenyl)propan-2,2. Ebenso sind Mischungen der derart hergestellten Polyamide einsetzbar. Von technisch besonderer Bedeutung sind Polycaprolactam und Polyhexamethylensebacinsäureamid sowie Polyamide die aus Hexamethylendiamin und Isophthalsäure und/oder Terephthalsäure aufgebaut sind.

Hinsichtlich der physikalischen Eigenschaften bestehen ebenfalls keine speziellen Beschränkungen, doch werden lineare Polyamide mit einer relativen Viskosität von 2,2 bis 4,5, gemessen in 96%iger Schwefelsäure (1 g/100 ml) bei 23°C , bevorzugt.

Der Anteil der Komponente B) an den erfindungsgemäßen Formmassen unterliegt wie der der Komponente A) keiner engen Beschränkung, doch werden ebenfalls 5 bis 92 Gew.%, vorzugsweise 10 bis 89 Gew.% des Polyamids, bezogen auf das Gesamtgewicht der Komponenten A) bis D) eingesetzt. Besonders bevorzugte Formmassen enthalten 35 bis 72, ganz besonders bevorzugt 45 bis 72 Gew.% eines Polyamids. Alle Prozentangaben beziehen sich auf die Gesamtmasse der Komponenten A) bis D).

Als wesentliche Komponente C) enthalten die erfindungsgemäßen Formmassen ein Copolymerisat aus

$C_1$) 97 bis 99,9 Gew.% Styrol und/oder substituierten Styrolen der allgemeinen Formel I

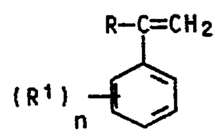

(I),

wobei R ein Wasserstoffatom, eine Alkylgruppe mit 1 - 8 C-Atomen und $R^1$ eine Alkylgruppe mit 1 bis 8 C-Atomen oder ein Halogenatom darstellen und n 0, 1, 2 oder 3 ist,

$C_2$) 0,1 - 3 Gew.% einer $\alpha,\beta$-ungesättigten Dicarbonylverbindung

und

$C_3$) 0 bis 10 Gew.% weiteren nicht-ionogenen, Comonomeren.

Unter den substituierten Styrolen der allgemeinen Formel I werden $\alpha$-Methylstyrol und p-Methylstyrol besonders bevorzugt, es eignen sich jedoch z.B. auch die verschiedenen Ethyl-und Chlorstyrole (m-, o-, p-), um nur einige zu nennen.

Als Komponente $C_2$) eignen sich prinzipiell alle $\alpha,\beta$-ungesättigten Dicarbonylverbindungen, insbesondere $\alpha,\beta$-ungesättigte Dicarbonsäuren oder deren Anhydride, Halbester, Ester, Amide oder Imide oder deren Gemische.

Als Beispiele seien hier Maleinsäure, Maleinsäureanhydrid, Halbester der Maleinsäure mit Alkoholen mit 1 - 8 C-Atomen, insbesondere mit 1 - 4 C-Atomen sowie die entsprechenden voll veresterten Maleinsäurederivate genannt. Als bevorzugte Beispiele für die beiden letzten Gruppen seien Maleinsäuremonomethylester und Maleinsäuredimethylester genannt, wovon esterer besonders bevorzugt wird.

Weitere Dicarbonsäuren, die als solche oder in Form ihrer entsprechenden Derivate eingesetzt werden können, sind Fumarsäure, Chlormaleinsäure, Dichlormaleinsäure, Methylmaleinsäure, Butenylbernsteinsäure und Tetrahydrophthalsäure.

Als Beispiele für Imide seien Maleinimid oder N-Phenylmaleinimid genannt.

Der Anteil des Monomeren $C_2$) beträgt 0,1 - 3, vorzugsweise 0,25 - 2 und insbesondere 0,5 - 1,5 Gew.%, bezogen auf das Gesamtgewicht der Komponenten $C_1$ + $C_2$) und ggf. $C_3$). Mengen von 1 Gew.% haben sich in vielen Fällen als ausreichend erwiesen.

Als Komponente $C_3$) können bis zu 10 Gew.%, vorzugsweise bis zu 5 Gew.% weiterer, nicht ionogener Comonomerer eingesetzt werden. Dabei werden besonders solche Produkte bevorzugt, die die Einstellung der Teilchenmorphologie nicht stören. Als Beispiele hierfür seien Methylacrylat, Acrylnitril und Methacrylnitril genannt. Im allgemeinen hat es sich als vorteilhaft herausgestellt, die Komponente $C_3$) entfallen zu lassen.

Das Molekulargewicht (Gewichtsmittelwert) der Copolymerisate C) liegt im allgemeinen im Bereich von 10 000 bis 2 000 000, vorzugsweise von 40 000 bis 300 000.

Der Anteil des Copolymerisats C) beträgt 3-50, vorzugsweise 5-20 und insbesondere 8-14 Gew.% bezogen auf das Gesamtgewicht der Formmasse.

Die Herstellung der erfindungsgemäß eingesetzten Copolymerisate C) kann auf an sich bekannte Weise

durch Masse-, Lösungs-, Emulsions-oder Suspensionspolymerisation sowohl kontinuierlich als auch ansatzweise erfolgen. Vorzugsweise polymerisiert man die Monomeren in einem geeigneten Lösungsmittel, wie z.B. Ethylbenzol. In einer besonders bevorzugten Ausführungsform werden die Monomeren, z.B. Styrol und Chlormethylvinylbenzol, bei 120 bis 150°C mit einem Radikalstarter oder insbesondere thermisch, d.h. ohne Radikalstarter, kontinuierlich bei erhöhtem Druck polymerisiert. In einer ganz bevorzugten Ausführungsform werden $C_1$) und $C_2$) thermisch bei etwa 140°C , etwa 10 bar Druck und etwa 6 h Verweilzeit kontinuierlich umgesetzt.

Als Komponente D) können die erfindungsgemäßen thermoplastischen Formmassen 0 bis 35, vorzugsweise 2 bis 25 und insbesondere 5 bis 20 Gew.% eines schlagzähmodifizierenden Kautschuks enthalten. Kautschuke mit einer Glasübergangstemperatur von weniger als 0°C werden dabei im allgemeinen bevorzugt.

Kautschuke können sowohl die Polyamidphase als auch die Polyphenylenether-Phase oder beide Phasen modifizieren.

Schlagzähmodifizierende Kautschuke für Polyamide sind z.B. Polybutadien-Acrylat, Styrol-Butadien-, Polybuten-, hydrierte Styrol-Butadien-, Acrylnitril-Butadien-, Ethylen-Propylen-, und Polyisopren-Kautschuke. Weiterhin geeignet sind Styrol-gepropfte Ethylen-Propylen-Kautschuke, thermoplastische Ethylen-Propylen-Kautschuke, thermoplastische Polyester-Elastomere, Ethylenkautschuke und Ioniomere, Styrol-Butadien-Blockcopolymere einschließlich AB-ABA-tapering, Stern-und Blockpolymerisaten, entsprechenden Isopren-Blockcopolymerisaten und teilweise oder vollständig hydrierten Blockcopolymere. Weitere Beispiele für - schlagzäh modifizierende Kautschuke für Polyamide sind der EP-A-144 767 zu entnehmen.

Gemäß einer bevorzugten Ausführungsform enthalten die erfindungsgemäßen Formmassen schlagzäh modifizierende Kautschuke, welche die Polyphenylenether-Phase schlagzäh modifizieren und dementsprechend in dieser dispergiert sind.

Derartige Kautschuke werden z.B. in der DE-OS 25 06 094 und der EP-A-137 546 beschrieben.

Hierbei sind im Prinzip die gleichen Kautschuke wie zur Modifizierung der Polyamide zu nennen. Besonders bevorzugt werden Blockcopolymere aus Styrol-, Methylstyrol-, Butadien-und/oder Isopren-Einheiten, z.B. mit AB, ABA, ABAB, ABC oder auch sternförmigem Aufbau (Radial-Teleblock-Copolymere), wobei die elastomere Phase teilweise oder vollständig hydriert sein kann, die Blöcke können auch verschmierte (tapering) Übergänge haben.

Als weitere Komponente können die erfindungsgemäßen thermoplastischen Formmassen übliche Zusatzstoffe und Verarbeitungshilfsmittel in wirksamen Mengen enthalten. Deren Anteil beträgt vorzugsweise bis zu 45, besonders bevorzugt bis zu 30 Gew.%, bezogen auf die Gesamtmasse der Komponenten A) bis D). Nur beispielsweise seien hier genannt Hitze-und Lichtstabilisatoren, Gleit-und Entformungsmittel, Färbemittel, wie z.B. Farbstoffe und Pigmente, Verstärkungsmittel, wie Glasfasern, Asbestfasern, Kohlenstoff-Fasern, aromatische Polyamidfasern und/oder Füllstoffe, Gipsfasern, synthetische Kalziumsilikate, Kaolin, kalziniertes Kaolin, Wollastonit, Talkum, Kreide, ferner auch Flammschutzmittel, wie anorganische und organische Phosphorverbindungen. Darüber hinaus können auch weitere niedermolekulare oder hochmolekulare Polymere als Zusatzstoffe in den erfindungsgemäßen Formmassen enthalten sein.

Vorzugsweise sind die erfindungsgemäßen thermoplastischen Formmassen so aufgebaut, daß der Polyphenylenether A) die dispergierte Phase und das Polyamid B) die kontinuierliche Phase darstellen. Besonders bevorzugt enthalten die Formmassen keine eigene Phase des Copolymerisats C), wie sie in elektronenmikroskopischen Aufnahmen oder Schubmodul-Kurven nachweisbar wäre. Vorzugsweise weist dabei der Polyphenylenether eine mittlere Teilchengröße (Zahlenmittelwert) in der kontinuierlichen Phase von nicht mehr als 0,5 µm, insbesondere 0,35 µm auf.

Die Herstellung der erfindungsgemäßen thermoplastischen Formmassen erfolgt zweckmäßigerweise durch Mischen der Komponenten bei Temperaturen im Bereich von 250 bis 320°C in üblichen Mischvorrichtungen, wie z.B. Knetern, Banburymischern und Einschneckenextrudern, vorzugsweise mit einem Zweischneckenextruder. Um eine möglichst homogene Formmasse zu erhalten, ist eine intensive Durchmischung notwendig. Die Reihenfolge des Mischens der Komponenten kann variiert werden, es können zwei oder gegebenenfalls drei Komponenten vorgemischt sein oder es können auch alle Komponenten gemeinsam gemischt werden.

Aus den erfindungsgemäßen thermoplastischen Formmassen lassen sich durch Spritzgießen oder Extrusion Formkörper mit vorteilhaften Eigenschaften, insbesondere guter Schlagzähigkeit und guter Fließfähigkeit herstellen.

Beispiele

Zur Herstellung erfindungsgemäßer Formmassen wurden folgende Komponenten eingesetzt:

A: Poly(2,6-dimethyl-1,4-phenylen)ether mit einer relativen Viskosität von 0,51 (gemessen in 1gew.%iger Lösung in Chloroform bei 30°C)

B: Polyhexamethylenadipinsäureamid(Polyamid-6,6) mit einem mittleren Molekulargewicht (Zahlenmittelwert) von 20 000

$C_1$: Styrol/Maleinsäuremonomethylester-Copolymerisat aus 98,7 Gew.% Styrol und 1,3 Gew.% Maleinsäuremonomethylester, hergestellt durch kontinuierliche Lösungspolymerisation bei 135°C, 8 bar Druck und 5 Stunden Verweilzeit unter Verwendung von 20 Gew.%, bezogen auf das Gesamtgewicht der Monomeren, an Ethylbenzol (Gewichtsmittelwert des Molekulargewichts: 75 000).

$C_2$ Styrol/Maleinsäuremonoethylester-Copolymerisat aus 99 Gew.% Styrol und 1 Gew.% Maleinsäuremonoethylester, hergestellt wie unter $C_1$ beschrieben.

D: Styrol-Butadien-Styrol-3-Blockcopolymer (Cariflex TR 1102 der Firma Shell)

Zum Vergleich wurden thermoplastische Formmassen hergestellt, die anstelle der erfindungsgemäßen Copolymerisate $C_1$ und $C_2$ folgende Copolymerisate enthielten:

$V_1$: Styrol/Maleinsäureanhydrid-Copolymerisat mit einem Maleinsäureanhydridgehalt von 11 Gew.%, welches mit 15 Gew.% Kautschuk modifiziert ist (Dylark 250 gemäß EP 46 040, Beispiele 11-13).

$V_2$: Styrol/Maleinsäureanhydrid-Copolymerisat mit einem Maleinsäureanhydridgehalt von 53 Gew.% (gemäß EP-A 147 874, Beispiel 1).

Die Formmassen wurden hergestellt, indem die Komponenten auf einem Zweischneckenextruder bei 280° gemischt und anschließend extrudiert wurden. Nach Granulierung wurden die Produkte im Spritzguß zu Prüfkörpern verarbeitet, an denen die Kerbschlagzähigkeit nach DIN 53 453 bestimmt wurde.

Weiter wurde der Schmelzindex nach DIN 53 735 bei einer Temperatur von 280°C und einer Belastung von 2,16 kg bestimmt.

Schließlich wurden auch elektronenmikroskopische Aufnahmen der Formmassen angefertigt. Dabei zeigte sich, daß in sämtlichen erfindungsgemäßen Formmassen die mittlere Teilchengröße (Zahlenmittelwert) unter 0.35 µm lag.

Die Zusammensetzung der einzelnen Formmassen und die Ergebnisse der Kerbschlagzähigkeit-und Schmelzindexmessungen sind der Tabelle 1 zu entnehmen.

Tabelle 1

| | Komponente | | | | | |
|---|---|---|---|---|---|---|
| Bsp. | A | B | C | D | Kerbschlagzähigkeit DIN 53 453 bei 23 °C kJ/m² | Schmelzindex 280°C/2,16 kg DIN 53 735 g/10 min |
| 1V | 45,45 | 45,45 | - | 9,1 | 1,5 | 3,1 |
| 2V | 45,0 | 45,0 | 0,9 $V_2$ | 9,1 | 2,8 | 3,0 |
| 3V | 41,7 | 41,7 | 8,3 $V_1$ | 8,3 | 2,7 | 3,6 |
| 4 | 41,7 | 41,7 | 8,3 $C_1$ | 8,3 | 12,0 | 7 |
| 5 | 36,9 | 45,1 | 9,0 $C_1$ | 9,0 | 13,5 | 9 |
| 6 | 41,7 | 41,7 | 8,3 $C_2$ | 8,3 | 10,0 | 6 |

V = Vergleichsbeispiel

## Ansprüche

1. Thermoplastische Formmassen, enthaltend als wesentliche Komponenten

A) 5 - 92 Gew.% eines Polyphenylenethers, welcher bis zu 50 Gew.% eines von C) verschiedenen Styrolpolymeren enthalten kann,

B) 5 - 92 Gew.% eines Polyamids,

C) 3 - 50 Gew.% eines Copolymerisats aufgebaut aus

$C_1$) 97 - 99,9 Gew.% Styrol und/oder substituierten Styrolen der allgemeinen Formel I

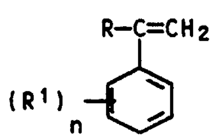

(I),

wobei R ein Wasserstoffatom, eine Alkylgruppe mit 1 - 8 C-Atomen oder ein Halogenatom und $R^1$ eine Alkylgruppe mit 1 bis 8 C-Atomen oder ein Halogenatom darstellen und n den Wert 0, 1, 2 oder 3 hat,

$C_2$) 0,1 - 3 Gew.% einer $\alpha,\beta$-ungesättigten Dicarbonylverbindung und

$C_3$) 0 - 10 Gew.% weiteren, nicht ionogenen Comonomeren,

sowie darüber hinaus

D) 0 - 35 Gew.% eines schlagzäh modifizierenden Kautschuks.

2. Thermoplastische Formmassen nach Anspruch 1, gekennzeichnet durch folgende Gehalte:

A) 20 - 47 Gew.%

B) 35 - 72 Gew.%

C) 5 - 20 Gew.%

D) 5 - 20 Gew.%

3. Thermoplastische Formmassen nach Anspruch 1 und 2, dadurch gekennzeichnet, daß sie keine eigene Phase des Copolymerisats C) enthalten.

4. Thermoplastische Formmassen nach den Ansprüchen 1 bis 3, dadurch gekennzeichnet, daß das Polyamid A) die kontinuierliche Phase und der Polyphenylenether die dispergierte Phase bildet, welche eine mittlere Teilchengröße (Zahlenmittelwert) von nicht mehr als 0,5 µm aufweist.

5. Thermoplastische Formmassen nach den Ansprüchen 2 bis 4, dadurch gekennzeichnet, daß der Kautschuk sich in der dispergierten Polyphenylenether-Phase befindet.

6. Verwendung der thermoplastischen Formmassen gemäß den Ansprüchen 1-5 zur Herstellung von Formkörpern.

7. Formkörper, erhältlich aus thermoplastischen Formmassen gemäß den Ansprüchen 1-5 als wesentlichen Komponenten.